# EUROPÄISCHE PATENTSCHRIFT

(11) **EP 0 444 268 B1**
(45) Veröffentlichungstag und Bekanntmachung des Hinweises auf die Patenterteilung: **11.08.1993**
(21) Anmeldenummer: 90123959.0
(22) Anmeldetag: 12.12.1990
(51) Int. Cl.: F16B 13/12, F16B 13/10

(54) **Rohrdübel zum Einsetzen in ein Bohrloch**
Tubular dowel for placing in a pre-drilled hole
Cheville tubulaire pour poser dans un trou prépercé

(30) Priorität: 02.03.1990 DE 4006615
(43) Veröffentlichungstag der Anmeldung: 04.09.1991
(73) Patentinhaber: ROCKENFELLER GmbH & Co. KG, D-57271 Hilchenbach (DE)
(72) Erfinder: Rockenfeller, Gottfried, W-5912 Hilchenbach (DE); Rockenfeller, Wolfgang, W-5912 Hilchenbach-Helberhausen (DE)
(74) Vertreter: Müller, Gerd, Dipl.-Ing.

(56) Entgegenhaltungen:
- DE-A- 3 816 662

## Beschreibung

Die Erfindung betrifft einen Rohrdübel zum Einsetzen in ein und Verankern in einem in ein Mauerwerk bzw. einen Baukörper, insbesondere aus Hart- und/oder Schwerbeton oder dergleichen, eingebrachtes Bohrloch, bestehend aus einer einen verbreiterten Kopfteil aufweisenden Metall-Hülse, vornehmlich aus plastisch verformbarem Stahl bzw. Edelstahl - ST34 bzw. ST37 - und aus Mitteln, mit deren Hilfe die Hülse in einem vom Kopfteil entfernten Längenbereich innerhalb des Bohrlochs hinsichtlich ihrer Querschnittsform bleibend veränderbar, bspw. in ihrer Querschnittsabmessung vergrößerbar ist, wobei in der Hülse ein Keilstück mit einer gegenüber der Hülsen-Längsachse spitzwinklig geneigten Keilfläche sowie ein der Keilfläche dieses Keilstücks zugeordneter Spreizkörper untergebracht sind, wobei das Keilstück ein amboßartiges Widerlager für den Spreizkörper bildet, wobei vom kopfseitigen Ende her ein stabförmiger Treiber für den Spreizkörper in die Hülse einführbar ist, und wobei durch von außen her auf den Treiber wirksame Axialkräfte der Spreizkörper entlang der Keilfläche des amboßartigen Widerlagers seitwärts aus der Hülsen-Längsachse gegen die Hülsenwände auslenkbar sowie unter plastischer Verformung derselben zwischen den Hülsenwänden und dem Keilstück verankerbar ist.

Rohrdübel dieser Gattung sind bereits bekannt durch die DE-A-38 16 662. Sie haben sich in der Praxis auch insofern schon bewährt, als sich bei ihrer Benutzung im Idealfall ein Verankerungseffekt in festem Mauerwerk oder ähnlichen Bauelementen, insbesondere aus Hart- und/oder Schwerbeton oder dergleichen, einstellt, welcher Auszugswerte von 10 000 N (1000 kp) und mehr gewährleistet.

Der ideale Verankerungseffekt stellt sich bei Benutzung des bekannten Rohrdübels immer dann ein, wenn das zu seiner Aufnahme im Mauerwerk oder dergleichen eingebrachte Bohrloch eine Tiefe hat, die exakt der Hülsenlänge des verwendeten Rohrdübels entspricht.

Da die Bohrlöcher in das Mauerwerk oder ähnlich Bauelemente praktisch aber immer mit Hilfe von Schlagbohrmaschinen eingearbeitet werden müssen, ist es nicht ohne weiteres möglich, deren Tiefe exakt an die Länge der verwendeten Rohrdübel anzupassen. Fällt jedoch die Bohrlochtiefe größer als die Hülsenlänge der Rohrdübel aus, dann stellt sich der maximale Verankerungseffekt nicht ein, d.h. die höchst möglichen Auszugswerte werden nicht mehr erreicht.

Die Erfindung zielt nun darauf ab, diese Nachteile der bekannten Rohrdübel auszuräumen. Es liegt deshalb der Erfindung die Aufgabe zugrunde, die bekannten Rohrdübel so fortzubilden, daß auch bei einer die Dübellänge überschreitenden Bohrlochtiefe die Erreichung des optimalen Verankerungseffektes ohne wesentlichen technischen Mehraufwand sichergestellt werden kann.

Gelöst wird diese Aufgabe nach der Erfindung durch die Kennzeichnungsmerkmale des Anspruchs 1, also dadurch, daß das amboßartige Widerlager an dem dem Kopfteil abgewendeten Ende der Hülse gegen Axialverschiebung unverschiebbar, z. B. durch einen Anschlag, abgestützt und/oder, bspw. durch Lötung oder Schweißung, festgelegt ist.

Beim Eintreiben des Keilstücks in die Hülse kann sich aufgrund der erfindungsgemäßen Ausgestaltung das amboßartige Widerlager nicht relativ zum Rohrdübel axial verschieben, sondern wird in seiner vorgegebenen Grundstellung blockiert, so daß das in der Hülse verschiebbare Keilstück seine größtmögliche seitliche Auslenkung erfährt und eine entsprechend große Aufweitung der Hülse bewirkt.

Zur Erreichung des gesteckten Ziels schlägt die Erfindung nach Anspruch 2 vor, daß das dem Kopfteil abgewendete Ende der Hülse mit einem eingesetzten oder angeformten Anschlag für das amboßartige Widerlager versehen ist.

Nach Anspruch 3 besteht dabei die erfindungsgemäße Möglichkeit, das dem Kopfteil abgewendete Hülsenende zuzubördeln, zuzulöten oder zuzuschweißen. Stattdessen kann aber auch das amboßartige Widerlager mit dem Hülsenende verlötet oder verschweißt werden.

Eine weitere Vereinfachung und Verbesserung des erfindungsgemäßen Rohrdübels ist nach Anspruch 4 dadurch erzielbar, daß der stabförmige Treiber aus einem Nagel besteht, der baueinheitlich das als Spreizkörper wirkende Keilstück bildet bzw. aufweist und dessen maximale Länge an den Abstand zwischen der Oberseite des Kopfes und dem Anschlag in der Hülse angepaßt ist.

Für eine verwendungsfertige Vormontage des Rohrdübels kann es sich als vorteilhaft erweisen, wenn gemäß Anspruch 5 die Grund- bzw. Ausgangsstellung des Nagels in der Hülse durch dessen Verklemmung mit dem amboßartigen Widerlager festgelegt ist. Zum gleichen Zweck kann aber nach Anspruch 6 der Nagel auch durch Verklebung mit dem amboßartigen Widerlager festgelegt werden.

Eine andere Weiterbildungsmaßnahme der Erfindung besteht nach Anspruch 7 darin, daß der Nagel durch Verkleben und/oder Verklemmen mit der Hülse festgelegt ist.

Schließlich sieht aber Anspruch 8 noch vor, daß die Hülse zum Zwecke der Verklemmung des Nagels Schaumstoff oder einen Stopfen aus elastisch verformbarem Material, wie z.B. Gummi, enthält.

In der Zeichnung sind verschiedene Ausführungsbeispiele des Erfindungsgegenstandes dargestellt. Es zeigen hierbei:
- Figur 1: im Längsschnitt einen in ein Bohrloch von Mauerwerk eingesetzten Rohrdübel unmittelbar vor Beginn seines Verankerungsvorgangs,
- Figur 2: in einer der Fig. 1 entsprechenden Darstellung den im Bohrloch des Mauerwerks nach Beendigung seines Verankerungsvorgangs festsitzenden Rohrdübel,
- Figur 3: den unteren Endabschnitt eines Rohrdübels in gegenüber den Fig. 1 und 2 abgewandelter Ausführung,
- Figur 4: wiederum das untere Ende eines Rohrdübels in einer weiteren, abgewandelten Ausführung und
- Figur 5: den oberen Längenabschnitt eines Rohrdübels in einer gegenüber den Fig. 1 und 2 weitergebildeten Ausführung.

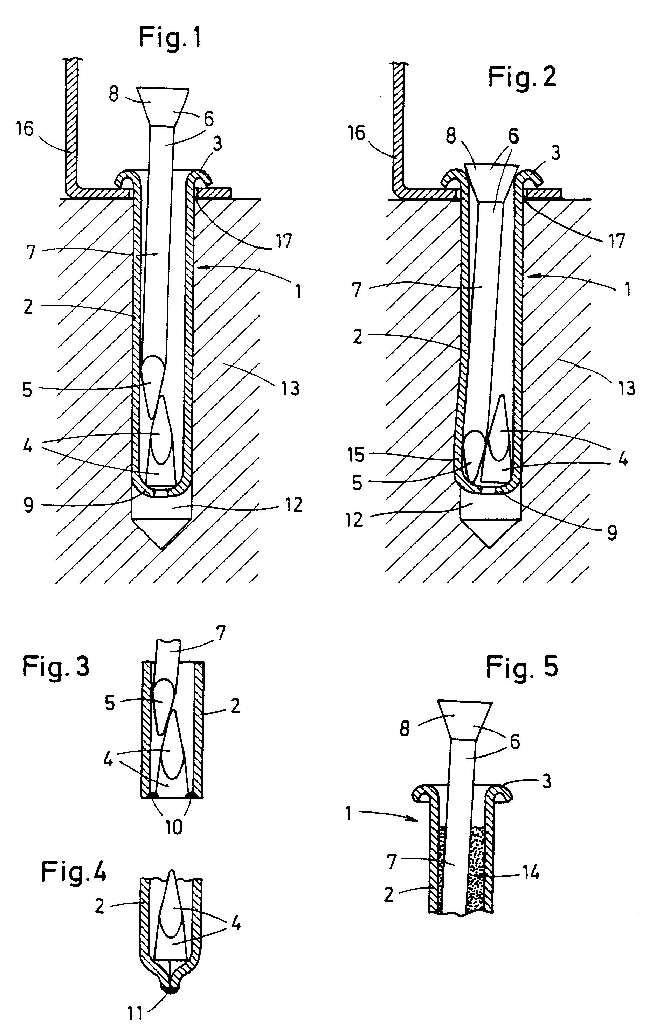

Die Fig. 1 und 2 der Zeichnung zeigen einen Rohrdübel 1 aus Metall, insbesondere Stahl - ST34 bzw. ST37 - oder Edelstahl, der aus einem Rohrstück gefertigt ist. Er weist dabei eine Hülse 2 auf, die an ihrem einen Ende ein einstückig angeformtes Kopfteil 3 trägt, das bspw. durch Umbörteln gebildet werden kann.

Zum Rohrdübel 1 gehört dabei noch ein amboßartiges Keilstück 4, das sich an dem vom Kopfteil 3 abgewendeten Ende in der Hülse 2 befindet.

Zugeordnet ist dem amboßartigen Keilstück 4 innerhalb der Hülse noch ein Spreizkörper 5, welcher ebenfalls von einem Keilstück gebildet ist.

Während vorzugsweise das amboßartige Keilstück 4 aus einem formfesten Material, bspw. gehärtetem Stahl, besteht, kann der keilförmige Spreizkörper 5 aus einem weniger formfesten Material, bspw. einem ungehärteten Stahl, gefertigt werden.

Als Treiber für den keilförmigen Spreizkörper 5 dient ein Nagel 6, an dessen Schaft 7 der Spreizkörper 5 einstückig angeformt ist. Dabei hat der Nagel 6 einen sich von oben nach unten kegelstumpfförmig verjüngenden Kopf, dessen größter Durchmesser auf den Innendurchmesser der Hülse 2 im Bereich des Kopfteils 3 am Rohrdübel 1 abgestimmt ist. Der Durchmesser des Schaftes 7 am Nagel 6 ist hingegen kleiner ausgeführt, als die lichte Weite der Hülse 2 des Rohrdübels 1.

Das amboßartige Keilstück dient als Widerlager für den keilförmigen Spreizkörper 5 und ist zumindest in seinem mittleren Durchmesser kleiner bemessen als die lichte Weite der Hülse 2 des Rohrdübels 1.

An dem dem Kopfteil 3 abgewendeten Ende der Hülse 2 ist das amboßartige Keilstück 4 gegen Axialverschiebung abgestützt und/oder festgelegt.

Bei dem aus den Fig. 1 und 2 ersichtlichen Rohrdübel 1 ist zu diesem Zweck das dem Kopfteil 3 abgewendete Hülsenende mit einem gegen die Hülsen-Längsachse hin abgebogenen Bördelrand 9 versehen, so daß hierdurch ein starrer Stützanschlag für das amboßartige Keilstück 4 gebildet wird.

Wie Fig. 3 der Zeichnung zeigt, kann das amboßartige Keilstück 4 aber auch durch Lötung oder Schweißung 10 am unteren Endrand der Hülse 2 starr befestigt werden.

Gemäß Fig. 4 ist es aber auch möglich, das untere Ende der Hülse über ein kurzes Längenteilstück mit einem Einschnitt zu versehen, die Hülsenwandungen zusammenzudrücken und diese dann durch Lötung oder Schweißung 11 zu stabilisieren. In diesem Falle wird ebenfalls ein Stützanschlag für das amboßartige Keilstück 4 gebildet.

Es sei hier darauf hingewiesen, daß die lichte Weite der Hülse 2 des Rohrdübels 1 kleiner ausgeführt ist, als das sich in Querschnittsrichtung ergebende Maß von amboßartigem Keilstück 4 und keilförmigem Spreizkörper 5, wenn diese mit ihrem größten Durchmesser nebeneinanderliegen.

Der Rohrdübel 1 kann mit seiner Hülse 2 in ein Bohrloch 12 eingeschoben werden, welches in Mauerwerk bzw. in einen Baukörper 13 eingebracht ist. Bei noch nicht verankertem Zustand des Rohrdübels 1 nehmen das amboßartige Keilstück 4, der keilförmige Spreizkörper 5 und der mit dem letzteren einstückig verbundene Nagel 6 die aus Fig. 1 ersichtliche Grundstellung ein. Dabei kann der keilförmige Spreizkörper 5 und mit ihm der Nagel 6 zwischen der Innenwand der Hülse 2 und dem amboßartigen Keilstück 4 allein durch Verklemmung fixiert sein, wie das in Fig. 1 der Zeichnung zu sehen ist. Möglich ist es aber auch, den keilförmigen Spreizkörper 5 mit dem amboßartigen Keilstück 4 durch Verklebung zu verbinden.

Ebenfalls besteht die Möglichkeit, den Schaft 7 des Nagels 6 durch Verklebung am Innenumfang der Hülse 2 zu fixieren oder aber im Inneren der Hülse 2 Schaumstoffmaterial 14 oder einen Stopfen aus elastisch verformbarem Material vorzusehen, wie das der Fig. 5 zu entnehmen ist. Durch dieses Schaumstoffmaterial 14 bzw. den Stopfen wird ebenfalls der Schaft 7 des Nagels 6 relativ zur Hülse 2 in einer Grundstellung lagefixiert, wie etwa mit Fig. 1 der Zeichnung vergleichbar ist.

Zur Verankerung des Rohrdübels 1 in der Bohrung 12 des Mauerwerks 13 bzw. Baukörpers wird der Nagel 6 aus der der Fig. 1 entsprechenden Stellung in die aus Fig. 2 ersichtliche Stellung eingetrieben. Dabei gleiten dann die Keilflächen des Spreizkörpers 5 und des amboßartigen Keilstücks 4 aneinander entlang, bis der Spreizkörper 5 und der Nagel 6 in die der Fig. 2 entsprechende Relativlage zueinander gelangen.

Mindestens über den gegenseitigen Anlagebereich von amboßartigem Keilstück 4 und keilförmigem Spreizkörper 5 wird dabei an der Hülse 2 des Rohrdübels 1 eine plastische Aufweitung 15 erzeugt, die eine feste Verankerung des gesamten Rohrdübels 1 in der Bohrung 12 des Mauerwerks 13 bzw. Baukörpers gewährleistet.

Da das amboßartige Keilstück 4 beim Eintreiben des Nagels innerhalb der Hülse 2 des Rohrdübels 1 gegen Axialverschiebung abgestützt und/oder festgelegt ist, wird die maximale Aufweitung 15 der Hülse 2 auch dann hervorgebracht, wenn das Bohrloch 12 eine Tiefe hat, welche die Länge des in der Bohrung 12 aufgenommenen Längenabschnitts der Hülse 2 überschreitet, wie das den Fig. 1 und 2 entnehmbar ist.

Den Fig. 1 und 2 der Zeichnung kann auch noch entnommen werden, daß die Gesamtlänge des Nagels 6, gemessen von der Spitze seines Spreizkörpers 5 bis zur Endfläche des Kopfes 8 an den Abstand der Oberseite des Kopfes 3 und den Anschlag 9 in der Hülse 2 angepaßt ist. Sobald daher der Nagel 6 über seine gesamte Länge in den Rohrdübel 1 eingetrieben wird, erhält dessen Hülse 2 auf demjenigen Längenbereich, auf welchem das amboßartige Keilstück 4 und der keilförmige Spreizkörper 5 mit ihrem Querschnitt nebeneinanderliegen, die maximale Aufweitung 15 und wird dadurch mit hoher Ausreißfestigkeit innerhalb des Bohrlochs 12 festgelegt, weil die Aufweitung 15 der Hülse innerhalb des Bohrlochs 12 gewissermaßen durch Ausbildung einer Hinterschneidung verankert wird.

Wie aus den Fig. 1 und 2 der Zeichnung ersichtlich ist, wird der Rohrdübel selbst, also nicht der in diesen eingetriebene Nagel 6 als Befestigungsmittel für die am Mauerwerk 13 bzw. Bauteil zu verankernden Gegenstände 16, bspw. Abhängelaschen bzw. Distanzhalter für Decken und Wandkonstruktionen, benutzt. Hierbei durchsetzt der Rohrdübel 1 mit seiner Hülse ein Loch 17, z.B. in einer Abwinkelung des betreffenden Gegenstandes 16, während der umgebörtelte Kopfteil 3 des Rohrdübels 1 entweder unmittelbar oder unter Zwischenschaltung von Unterlegscheiben den Rand des Loches 17 übergreift und die Abwinkelung des Gegenstandes 16 gegen die Stirnfläche des Mauerwerks 13 bzw. des Bauteils anpreßt.

Es wird darauf hingewiesen, daß sowohl das amboßartige Keilstück 4 als auch der keilartige Spreizkörper 5 lediglich nur eine Keilfläche aufweisen müssen, über die sie miteinander in Wirkverbindung treten können. Für den praktischen Einsatz hat es sich jedoch besonders bewährt, sowohl das amboßartige Keilstück 4 als auch den keilartigen Spreizkörper 5 nach Art einer üblichen Nadelspitze mit mehreren in Umfangsrichtung verteilten Keilflächen auszustatten, so daß jeweils Pyramidenspitzen gebildet werden, die über jede beliebige ihrer Keilflächen miteinander in Wirkverbindung treten können, um beim Eintreiben des Nagels 6 nahe dem Ende der Hülse 2 des Rohrdübels 1 die Hinterschneidungs-Aufweitung 15 auszubilden.

## Patentansprüche

1. Rohrdübel zum Einsetzen in ein und Verankern in einem in ein Mauerwerk bzw. einen Baukörper, insbesondere aus Hart-und/oder Schwerbeton oder dergleichen, eingebrachtes Bohrloch, bestehend aus einer einen verbeiterten Kopfteil aufweisenden Metall-Hülse, vornehmlich aus plastisch verformbarem Stahl bzw. Edelstahl - ST34 bzw. ST37 - und aus Mitteln, mit deren Hilfe die Hülse in einem vom Kopfteil entfernten Längenbereich innerhalb des Bohrlochs hinsichtlich ihrer Querschnittsform bleibend veränderbar, bspw. in ihrer Querschnittsabmessung vergrößerbar ist, wobei in der Hülse ein Keilstück mit einer gegenüber der Hülsen-Längsachse spitzwinklig geneigten Keilfläche sowie ein der Keilfläche dieses Keilstücks zugeordneter Spreizkörper untergebracht sind, wobei das Keilstück ein amboßartiges Widerlager für den Spreizkörper bildet, wobei vom kopfseitigen Ende her ein stabförmiger Treiber für den Spreizkörper in die Hülse einführbar ist und wobei durch von außen her auf den Treiber wirksame Axialkräfte der Spreizkörper entlang der Keilfläche des amboßartigen Keilstücks seitwärts aus der Hülsen-Längsachse gegen die Hülsenwände auslenkbar sowie unter plastischer Verformung derselben zwischen den Hülsenwänden und dem Keilstück verankerbar ist,
**dadurch gekennzeichnet,**
daß das amboßartige Widerlager (4) an dem dem Kopfteil (3) abgewendeten Ende der Hülse (2) gegen Axialverschiebung unverschiebbar, z. B. durch einen Anschlag (9 bzw. 11), abgestützt und/oder, bspw. durch Lötung oder Schweißung (10), festgelegt ist.

2. Rohrdübel nach Anspruch 1,
**dadurch gekennzeichnet,**
daß das dem Kopfteil (3) abgewendete Ende der Hülse (2) mit einem angeformten oder eingesetzten Anschlag (9) für das amboßartige Widerlager (4) versehen ist.

3. Rohrdübel nach einem der Ansprüche 1 und 2,
**dadurch gekennzeichnet,**
daß das dem Kopfteil (3) abgewendete Ende der Hülse (2) zugebörtelt (9), zugelötet bzw. zugeschweißt (10, 11) oder aber das amboßartige Widerlager (4) dort durch Verlöten und/oder Verschweißen befestigt ist.

4. Rohrdübel nach einem der Ansprüche 1 bis 3,
**dadurch gekennzeichnet,**
daß der stabförmige Treiber aus einem Nagel (6) besteht, welcher baueinheitlich das als Spreizkörper wirkende Keilstück (5) bildet bzw. aufweist und dessen maximale Länge an den Abstand zwischen der Oberseite des Kopfes (3) und dem Anschlag (9, 10, 11) in der Hülse (2) angepaßt ist.

5. Rohrdübel nach einem der Ansprüche 1 bis 4,
**dadurch gekennzeichnet,**
daß die Grund- bzw. Ausgangsstellung des Nagels (6) in der Hülse (2) durch Verklemmung des keilförmigen Spreizkörpers (5) mit dem amboßartigen Widerlager (4) festgelegt ist.

6. Rohrdübel nach einem der Ansprüche 1 bis 4,
**dadurch gekennzeichnet,**
daß die Grund- bzw. Ausgangsstellung des Nagels (6) in der Hülse (2) durch Verklebung des keilförmigen Spreizkörpers (5) mit dem amboßartigen Widerlager (4) festgelegt ist.

7. Rohrdübel nach einem der Ansprüche 1 bis 4,
**dadurch gekennzeichnet,**
daß die Grund- bzw. Ausgangsstellung des Nagels (6) in der Hülse (2) durch Verkleben und/oder Verklemmen desselben mit der Hülse (2) festgelegt ist.

8. Rohrdübel nach einem der Ansprüche 1 bis 4,
**dadurch gekennzeichnet,**
daß die Hülse (2) zur Verklemmung des Nagels (6) eine Schaumstoffüllung (17) oder einen Stopfen aus anderem elastisch verformbarem Material, z.B. Gummi oder Kork, enthält.

## Claims

1. A tubular dowel for insertion and anchoring in a hole drilled
in masonry or in a structural body especially of hard and/or high-density concrete or the like, and consisting of a metal sleeve exhibiting a widened part at the head and mainly of plastically deformable steel or stainless steel - ST34 or ST37 - and of means by which in a region of the length inside the drilled hole and remote from its head part the sleeve may be altered permanently in its cross-sectional shape, e.g., enlarged in its cross-sectional dimension because a wedgepiece having a wedge face inclined at an acute angle to the longitudinal axis of the sleeve and a spreader body associated with this wedgepiece are accommodated in the sleeve with the wedgepiece forming for the spreader body an anvil-like abutment, and a driver in the form of a rod for the spreader body may be introduced into the sleeve from the end at its head and through axial forces acting from outside upon the driver the spreader body may be deflected form the longitudinal axis of the sleeve sideways along the wedge face of the anvil-like wedgepiece against the walls of the sleeve and by plastic deformation of the latter become anchored between the walls of the sleeve and the wedgepiece,
**characterized in that**
the anvil-like abutment (4) at the end of the sleeve (2) remote from its head part (3) is supported immovably against axial shifting, e.g., by a stop (9 or 11) and/or is fixed by soldering or welding (10).

2. A tubular dowel as in Claim 1,
**characterized in that**
the end of the sleeve (2) remote from the head part (3) is provided with a moulded-on or inserted stop (9) for the anvil-like abutment (4).

3. A tubular dowel as in one of the Claims 1 and 2,
**characterized in that**
the end of the sleeve (2) remote from the head part (3) is flanged together (9) or soldered or welded together (10, 11) or else the anvil-like abutment (4) is fastened there by soldering and/or welding.

4. A tubular dowel as in one of the Claims 1 to 3,
**characterized in that**
the driver in the form of a rod consists of a nail (6) which forms or exhibits in one constructional unit the wedgepiece (5) acting as the spreader body and the maximum length of which is adapted to the distance between the upper face of the head (3) and the stop (9, 10, 11) in the sleeve (2).

5. A tubular dowel as in one of the Claims 1 to 4,
**characterized in that**
the normal or starting position of the nail (6) in the sleeve (2) is established by clamping the wedge-shaped spreader body (5) to the anvil-like abutment (4).

6. A tubular dowel as in one of the Claims 1 to 4,
**characterized in that**
the normal or starting position of the nail (6) in the sleeve (2) is established by gluing the wedge-shaped spreader body (5) to the anvil-like abutment (4).

7. A tubular dowel as in one of the Claims 1 to 4,
**characterized in that**
the normal or starting position of the nail (6) in the sleeve (2) is established by gluing and/or clamping it to the sleeve (2).

8. A tubular dowel as in one of the Claims 1 to 4,
**characterized in that**
for clamping the nail (6) the sleeve (2) contains a foam filling (17) or a plug of some other elastically deformable material, e.g., rubber or cork.

## Revendications

1. Cheville tubulaire destinée à être introduite et à être ancrée dans un trou percé dans un mur ou dans un élément de construction, en particulier en béton dur et/ou en béton lourd, ladite cheville comprenant un fourreau métallique qui présente une partie de tête évasée et qui est réalisée principalement en acier, ou en acier inoxydable plastiquement déformable - ST 34 ou ST 37 - et comprenant des moyens à l'aide desquels le fourreau peut être déformé de façon permanente quant à la forme de sa section transversale, ou peut être élargi quant à la taille de sa section transversale, à l'intérieur du trou et dans une zone longitudinale éloignée de la partie de tête, une pièce formant coin présentant une surface de coin inclinée à angle aigu par rapport à l'axe longitudinal du fourreau et une pièce d'écartement associée à la surface de coin de cette pièce formant coin étant logée dans le fourreau, la pièce formant coin constituant une butée du genre enclume pour la pièce d'écartement, un poussoir en forme de tige pour la pièce d'écartement pouvant être introduit dans le fourreau depuis l'extrémité côté tête, de sorte que sous l'effet de forces axiales agissant sur le poussoir depuis l'extérieur, la pièce d'écartement peut être déviée le long de la surface de coin de la pièce formant coin et analogue à une enclume, en direction du côté par rapport à l'axe longitudinal du fourreau et contre les parois du fourreau, et peut être ancré entre les parois du fourreau et la pièce formant coin sous déformation plastique de ces parois, caractérisée en ce que la butée (4) analogue à une enclume est supportée, par exemple par une butée (9 ou 11), à l'extrémité du fourreau (2) éloignée de la partie de tête (3) de manière à être immobilisée à l'encontre d'un déplacement axial, et/ou y est fixée, par exemple par soudure ou brasage (10).

2. Cheville selon la revendication 1, caractérisée en ce que l'extrémité du fourreau (2) éloignée de la partie de tête (3) est pourvue d'une butée (9), ménagée par formage ou par insertion, pour la butée analogue à une enclume (4).

3. Cheville selon l'une ou l'autre des revendications 1 et 2, caractérisée en ce que l'extrémité du fourreau (2) éloignée de la partie de tête (3) est fermée par bordage (9), par soudure ou par brasage (10, 11) et/ou en ce que la butée analogue à une enclume (4) y est fixée par soudure et/ou brasage.

4. Cheville selon l'une des revendications 1 à 3, caractérisée en ce que le poussoir en forme de tige comprend un clou (6) qui forme ou qui comporte en tant qu'une unité structurelle la pièce formant coin (5) qui agit en tant que pièce d'écartement, et dont la longueur maximale est ajustée à la distance entre la face supérieure de la tête (3) et la butée (9, 10, 11) dans le fourreau (2).

5. Cheville selon l'une des revendications 1 à 4, caractérisée en ce que la position de base ou de départ du clou (6) dans le fourreau (2) est fixée par coincement de la pièce d'écartement en forme de coin (5) contre la butée analogue à une enclume (4).

6. Cheville selon l'une des revendications 1 à 4, caractérisée en ce que la position de base ou de départ du clou (6) dans le fourreau (2) est fixée par collage de la pièce d'écartement en forme de coin (5) contre la butée analogue à une enclume (4).

7. Cheville selon l'une des revendications 1 à 4, caractérisée en ce que la position de base ou de départ du clou (6) dans le fourreau (2) est fixée par collage et/ou par coincement du clou contre le fourreau (2).

8. Cheville selon l'une des revendications 1 à 4, caractérisée en ce que, en vue du coincement du clou (6), le fourreau (2) contient un remplissage d'un matériau en forme de mousse (17) ou un bouchon en un autre matériau élastiquement déformable, par exemple caoutchouc ou liège.
